# EUROPEAN PATENT SPECIFICATION

(11) **EP 2 530 651 B1**
(45) Date of publication and mention of the grant of the patent: **01.05.2019**
(21) Application number: 12168986.3
(22) Date of filing: 23.05.2012
(51) Int. Cl.: G06T 7/00, H04N 17/00, H04N 7/18

(54) **Method for operating a camera system of a motor vehicle, motor vehicle as well as system with a motor vehicle and a separate computing device**
Verfahren zum Betrieb eines Kamerasystems eines Kraftfahrzeugs, Kraftfahrzeug sowie System mit einem Kraftfahrzeug und separate Datenverarbeitungsvorrichtung
Procédé de fonctionnement d'un système de caméra de véhicule à moteur, véhicule à moteur ainsi que système avec un véhicule à moteur et dispositif informatique séparé

(30) Priority: 28.05.2011 DE 102011102744
(43) Date of publication of application: 05.12.2012
(73) Proprietor: Connaught Electronics Ltd., Tuam, County Galway (IE)
(72) Inventor: Ward, Enda Peter, Corofin (IE); Denny, Patrick Eoghan, Roscam, County Galway (IE)
(74) Representative: Jauregui Urbahn, Kristian

(56) References cited:
- US-A1- 2008 117 287
- US-A1- 2010 253 492

## Description

The invention relates to a method for operating a camera system of a motor vehicle by capturing at least one image by means of a camera of the camera system as well as transmitting image data representing the at least one image via a wireless communication network to a computing device separate from the motor vehicle. The invention additionally relates to a motor vehicle with a camera system including a camera for capturing an image as well as including a communication unit for transmitting image data to a computing device separate from the motor vehicle. Moreover, the invention relates to a system with a motor vehicle as well as a computing device separate from the motor vehicle.

It is prior art to transmit images captured by a camera of a motor vehicle to a server distant from the motor vehicle. Such an approach is for example known from the document US 7 100 190 B2. This document describes a communication system with a plurality of motor vehicles each having a camera. Thus, one camera is respectively mounted on each of the motor vehicles. The images captured with the cameras are transmitted to a host server via a wireless communication network. Then, the images can be displayed on a display. In addition, the video data is provided in the Internet such that the user can retrieve the images on an Internet site.

From the document WO 2006/020219 A2, a vehicle console is known, which is formed for receiving as well as transmitting audio and video data. The console has a housing, which can be mounted in a motor vehicle. The console includes a receiver serving for wirelessly receiving audio and video data from an input apparatus. The console additionally includes a recording apparatus recording the received audio and video data. A transmitter is also provided in the housing, which serves for wirelessly transmitting the audio and video data to a further apparatus. The console can also have a display, on which in turn the video can be displayed.

From the printed matter KR 10 2004 041 803 A, a system for providing data of a motor vehicle in the Internet is known. In the motor vehicle, a plurality of cameras are provided, which each have a GPS receiver as well as a wireless LAN card. The video data captured by the cameras are transmitted to a remote computing device via a wireless communication network and provided there in a database

US 2010/253492 A1 discloses a head-up display system with calibration using an external device connected via Wi-Fi.

US 2008/117287 A1 discloses a calibration module capable of modifying information associated with at least one of the series of images, where the modification results in calibration data stored in a configuration file.

It is an object of the invention to demonstrate a solution how in a method of the initially mentioned kind the area of application of the camera system of the motor vehicle can be extended compared to the prior art.

According to the invention, this object is solved by a method having the features according to claim 1 as well as by a motor vehicle having the features according to claim 17 as well as a system having the features according to claim 18. Advantageous implementations of the invention are the subject matter of the dependent claims, of the description and of the figures.

A method according to the invention serves for operating a camera system of a motor vehicle by capturing at least one image by a camera of the camera system as well as transmitting image data representing the at least one image via a wireless communication network to a computing device separate from the motor vehicle. According to the invention, it is provided that the image data is processed by means of the computing device and a result of processing is transmitted from the computing device to the camera system of the motor vehicle, namely via the wireless communication network. Namely, on the basis on the image data, an algorithm for a calibration of the camera is performed by the computing device, and a result of this algorithm is transmitted to the camera system.

A central idea of the invention is thus in that the image data captured by the camera is transmitted to an external computing device and processed there, and that the result of this processing is communicated to the camera system. Depending on this result, the camera system can then provide a functionality in the motor vehicle or perform a function. Thus, such functionalities can also be provided in the motor vehicle, which require relatively much computational effort and otherwise could only be provided with computationally powerful signal processors, like performing the algorithm for the calibration of the camera. Now, it can be dispensed with such computationally powerful and expensive signal processors in the motor vehicle or the computation resources already present in the motor vehicle can be relieved and saved. The method according to the invention thus allows in principle the provision of all of the possible functionalities in the motor vehicle without having to employ additional computation resources in the motor vehicle. Overall, thus, the area of application of the camera system in the motor vehicle is extended compared to the prior art, and more functionalities than in the prior art can be provided by means of the camera system.

The transmission of the image data to the external computing device thus allows the provision of computationally intensive functionalities, which otherwise could only be provided with the aid of a computationally powerful signal processor of the motor vehicle. Such a computationally intensive functionality is the calibration of the camera. Within the scope of processing the image data, the algorithm for the calibration of the camera is performed by the computing device and the result of the algorithm is transmitted to the camera system via the wireless communication network. Thus, the camera can even be calibrated if the camera system does not possess a computationally powerful signal processor and thus is not capable of performing such an algorithm by itself or only in restricted manner. However, if such a signal processor is present in the motor vehicle, its computational power can be saved for other, more important functionalities. This embodiment exploits the fact that the algorithms for the calibration of cameras known from the prior art are relatively computationally intensive and time consuming. Namely, the known algorithms take relatively long, in particular if they are performed by a low power signal processor in the motor vehicle. If such an algorithm for the calibration of the camera was performed in the motor vehicle, thus, the major computation resources would have to be used only for performing this algorithm, and further functionalities in the motor vehicle optionally could not be provided. On the other hand, it is always required to calibrate the camera in order that the camera system functions without error. Thus, the invention provides for an errorless functioning camera system on the one hand and also for relieving the computation resources in the motor vehicle on the other hand, such that further functionalities in the motor vehicle can also be provided by the camera system at the same time, namely based on the captured images.

The method according to the invention moreover has the advantage that in the external computing device - which may be a host server of a vehicle manufacturer - also additional information may be present which as a rule are not available in the vehicle. For performing the algorithm thus additional data - such as statistic data of other vehicles - can be considered which are not present in the camera system of the own vehicle. Thus, by means of the computing device an algorithm is performed for the calibration of the camera and the result of this algorithm is transmitted to the camera system of the vehicle. A calibration of the camera is required in particular for being capable of correctly representing the recorded images on a display within the vehicle. This is the case particularly if together with the recorded images of the surroundings of the vehicle also a vehicle image showing the own vehicle is displayed. In order to be able to correctly - relative to the vehicle image - display the images of the surroundings, the actual position and orientation of the camera on the vehicle would need to be known. This, however, due to the mounting tolerances and due to further parameters - such as aging, mechanical deformation and the like - is not possible or possible only at a very large effort. As result of the algorithm, the computing device thus can calculate a correction factor for the correction of the position of the recorded images relative to the vehicle image and transmit it to the camera system. The position of the images of the surroundings relative to the vehicle image on the display thus can be corrected by the correction factor, so that on the whole a plausible overall image is generated.

In order to determine the correction factor, the external computing device first can expose the received image data - i.e. the received images - to a pattern identification with regard to pre-determined features. For instance, the computing device can search for road markings within the received image, such as a lane demarcation. Then the computing device can check whether there exists parallelism or not between the identified road marking and the vehicle longitudinal direction or the direction of movement of the vehicle. If a deviation is detected, this deviation can be used as correction factor. The invention, however, is not limited to this kind of computing the correction factor; basically, all algorithms known from the prior art for the calibration of a camera attached on the vehicle can be applied.

The correction factor can also be taken into consideration when composing images of various cameras which are attached on the vehicle and capture the surroundings of the vehicle. From the images of various cameras an overall image can be generated by the camera system, which provides a plan view of the surroundings of the vehicle. This overall image then can be displayed on the display device in the interior of the vehicle. The correction factor can be used in order to facilitate transitions between the images of various cameras which are true to reality and have no image jumps. Because the correction factor considers the deviation of the actual positions of the cameras from their respective desired positions, thus a jump-free transition between images of the various cameras and thus a correct overall image can be achieved.

Together with the image data also position data - such as GPS data - can be transmitted by the camera system to the computing device, the position data comprising information about the global position of the vehicle at the time of recording the image. The computing device then can consider these position data with regard to the algorithm. Thus the algorithm can be performed even more precisely, and the calibration of the camera can be effected in a more robust and precise way. Namely, the computing device can consider the position data to the effect that in dependence on the global position of the vehicle (at the time of recording the image) the result of the algorithm is either accepted as plausible or dismissed as implausible. Alternatively, in dependence on the global position of the vehicle it can be decided whether the algorithm should be performed on the basis of the image data or not. This embodiment is based on the realisation that the algorithm for the calibration of the camera can be performed particularly reliably only on the condition that the vehicle at the time of recording the image was on a straight road and not in a bend for example. The correction factor in particular can be accepted as plausible if at the time of recording the image no gradient or slope of the road was given, but the road extended in essence horizontally. This information now can now be extracted by the computing device from the received position data, and the computing device can decide whether the result of the algorithm is plausible or not or whether the algorithm should be performed at all or not.

Reasonably, it is also possible that data by which at least one preferred road section is suggested for the recording of the image data for the performance of the algorithm are transmitted from the external computing device to the camera system. This means that the computing device can transmit data to the camera system which contain information about the preferred global position for the execution of the calibration. This suggestion is preferably made in dependence on the position data which are transmitted from the camera system of the vehicle to the computing device. Thus the computing device can suggest a road section which is in the vicinity of the vehicle. This suggestion can be made be the computing device also in consideration of the data of other vehicles. Namely data of a plurality of vehicles can be collected in the computing device and be statistically analysed. The transmission of the suggestion to the camera system of the vehicle in principle has two advantages: On the one hand, this allows for a better result for the calibration of the camera, because the algorithm is performed on the basis of plausible image data. On the other hand, the calibration needs not be effected as frequently as in the case of a suboptimal - for instance inclined - road. Thereby energy can be saved and a frequent communication with the computing device is no longer necessary.

Together with the image data the camera system can also transmit vehicle data to the computing device, which contain information about an acceleration of the vehicle at the time of recording the image and/or an information about an inclination angle of the vehicle - in particular a rolling angle and/or a yawning angle and/or a pitch angle. These vehicle data then can be considered by the computing device with regard to the algorithm. Thus the algorithm is particularly robust and reliable, and a particularly reliable and highly precise calibration of the camera can be effected. This embodiment, too, is based upon the realisation that a plausible and highly precise calibration can only be made on the basis of image date which were recorded at a "normal" position of the vehicle relative to the road. The position of the vehicle for instance is influenced by the acceleration of the vehicle as well as by the inclination of the road. These influences now are considered with regard to the algorithm for the calibration. Namely the inclination angle of the vehicle and/or its acceleration can be considered to the effect that in dependence on this information the result of the algorithm is either accepted as plausible or dismissed as implausible. Alternatively, the inclination angle and/or the acceleration itself can be considered when performing the algorithm. Thus the calibration of the camera is particularly precise.

As already set out, the algorithm can be performed for the calibration also for a plurality of vehicles by means of the computing device. Then a plurality of data relating to various vehicles is available in the computing device. This facilitates a statistical analysis of the data of a plurality of vehicles in such a way that the calibration of the camera can still be improved and new realisations can be gained. For instance the data - namely the plurality of the results of the algorithm - can be exposed to a data-mining method. A data-mining method allows for instance the automatic analysis of data stocks with the aid of statistical methods such as for instance for cluster analysis and outlier detection. For instance in the data certain clusters or patterns and/or outliers can be detected. By way of comparison of the result of the algorithm for the calibration of the camera with a result of the data-mining method then an incorrect operation of the camera system can be detected. This information then can be transmitted to the camera system of the vehicle, so that the driver is made to take his vehicle to a garage or else to update the software of the camera system. Additionally or alternatively a result of the data-mining method can also be considered when performing the algorithm for the calibration of the camera. Thus, insights gained with regard to other vehicles can also be considered when calibrating the camera of the vehicle, in order to improve the calibration of the camera.

For example, the camera can be a CMOS (complementary metal oxide semiconductor) camera or else a CCD (charge coupled device) camera.

Generally, the camera can be disposed in any position of the motor vehicle. For example, it can capture an environmental region of the motor vehicle; alternatively, it can also be disposed in the interior space of the motor vehicle and capture the interior space of the motor vehicle. It can also be provided that a plurality of cameras - for capturing the environment and/or the interior space - is employed and the image data of all of the cameras is transmitted to the external computing device. Thus, the computing device can also process the image data of a plurality of cameras of the motor vehicle and communicate a result of this processing to the camera system.

Thus, the image data is transmitted to the external computing device via a wireless communication network. Principally, any wireless communication network is conceivable here, namely for example the Internet and/or the GSM network (global system for mobile communication) and the like. It proves advantageous if the image data and/or the result of the processing or the algorithm are transmitted at least in sections according to a communication standard of the IEEE 802.16 family. This communication standard is also known under the designation "WiMax". It allows transmission of the image data in real time such that the result of image processing can be communicated to the camera system in particularly fast manner. Thus, the functionalities in the motor vehicle can also be particularly fast provided depending on the result of the image processing.

With respect to the external computing device, two different embodiments can be provided: the image data can be transmitted to a portable communication apparatus as the computing device and be processed by the portable communication apparatus. The portable communication apparatus can for example be a mobile phone (Smartphone) of the driver or the like. Additionally or alternatively, the image data can also be transmitted to a remote host server as the computing device and be processed by means of the host server. This has the advantage that such host servers usually possess a relatively great computational power such that computationally intensive image processing can also be particularly fast performed. The transmission of the image data to a portable communication apparatus in turn has the advantage that the images captured by means of the camera can also be displayed on a display of the portable communication apparatus at the same time.

Apart from the algorithm for calibrating the camera, further algorithms are also known, which are also particularly computationally intensive. For example, such algorithms also belong to them, which serve for object identification or for classification of depicted objects. The processing of image data by the computing device thus can include that the at least one image is subjected to pattern identification and an object identified in the image is classified. The result of this object classification can then be communicated to the camera system via the wireless communication network. In this embodiment too, the computation resources inside the vehicle are saved and the expensive algorithms for object classification are performed by the external computing device. This embodiment can be utilized for detecting an intruder in particularly reasonable manner. In this case, the camera - optionally also plural cameras - can capture the environment of the motor vehicle and transmit the image data to the computing device also in the standstill of the motor vehicle. Now, the computing device can subject these image data to the object identification and transmit the result of this object identification to the camera system. For example, if an intruder is detected based on the images, thus, corresponding measures can be taken by the camera system; for example, the driver of the motor vehicle can be informed about the presence of the intruder. A theft of the motor vehicle can therefore be prevented.

Depending on the result of the object classification, thus, at least one functionality can be provided by the camera system. Thus, for example, an intrusion sensor of the motor vehicle can be activated if an intruder is detected upon object classification. Additionally or alternatively, a time sequence of images - thus a video - can also be captured by the camera and video data representing the sequence of images can be transmitted to a portable communication apparatus - for instance a mobile phone - of the driver via the wireless communication network. If an intruder is identified, thus, the driver can get displayed the captured images on his portable communication apparatus (mobile phone) such that the driver can optionally also see the intruder on the display of the communication apparatus. In this manner, it is allowed to determine the identity of the intruder.

Thus, the camera system transmits the at least one image to the external computing device, namely via the wireless communication network. The computing device processes the at least one image and transmits the result of this processing to the camera system. The image data transmitted from the camera system to the computing device can also include plural images, which are then processed by the computing device. Even an entire video can also be transmitted to the computing device, and the computing device can process the entire video and transmit the result of this processing to the camera system. Thus, in an embodiment, it is provided that a time series or sequence of images - one after the other, for instance a video - is captured by the camera and video data is transmitted to the computing device, which represents the time sequence of images. The computing device can then process the time sequence of images or the video data and transmit the result of this processing to the camera system of the motor vehicle. Based on an entire video, functionalities can be provided in the motor vehicle, which otherwise are not possible based on a single image. Thus, for example, movable obstacles can be detected and tracked by the computing device and the result of this detection as well as of tracking can then be transmitted to the camera system.

The camera can also be disposed in the motor vehicle such that it captures the interior space of the motor vehicle. The processing of the image data can then include that the identity of the driver of the motor vehicle is determined by the external computing device based on the at least one image, and data with information on the identity of the driver is transmitted to the camera system. Thus, identification of the diver can be made on the one hand and it can be checked whether or not the identified driver is authorized to drive the motor vehicle, respectively. On the other hand, this embodiment can also be utilized to make driver-specific adjustments of very different components of the motor vehicle.

Depending on the determined identity of the driver, thus, at least one component of the motor vehicle can be controlled. This can for example be an alarm system and/or a vehicle lock, which can be controlled if the driver is not authorized to drive the motor vehicle. An electronic adjustment means for adjusting a vehicle seat of the driver can also be controlled as the component, namely specific to driver or depending on the determined identity of the driver. Generally, depending on the identity of the driver, at least one of the following functionalities can be provided in the motor vehicle:
- activating an alarm system and/or a vehicle lock, and/or
- adjusting a position of a vehicle seat, and/or
- adjusting a position of a steering wheel of the motor vehicle, and/or
- adjusting a parameter of a suspension or spring system of the motor vehicle - for example "sportive" or "comfort" - and/or
- adjusting a parameter of a driving engine of the motor vehicle, and/or
- adjusting an orientation of a mirror of the motor vehicle, namely of an interior mirror and/or an exterior mirror, and/or
- adjusting a parameter of the camera system (e.g. a preferred default camera view mode).

Thus, all of these parameters can be automatically adjusted specific to driver without the driver having to make these adjustments himself. This is particularly convenient for the driver; he only has to enter the motor vehicle, and the adjustments assigned to him are automatically taken over. Therein, the computation resources inside the vehicle are not loaded, but the identity of the driver is determined by means of the external computing device.

A collision situation or else a situation near collision of the motor vehicle can also be identified by the camera system. Namely, the camera system can identify that a collision of the motor vehicle is imminent or occurs, and after identifying such a collision situation, an image can be captured by the camera and transmitted to a host server of an emergency service via the wireless communication network. The capability of the camera system to communicate with other apparatuses via the wireless communication network can thus be utilized to inform the emergency service about an imminent or occurred collision of the motor vehicle. Such a collision situation can for example be identified based on the evaluation of a longitudinal acceleration and/or lateral acceleration and/or based on measured values of a braking force. Thus, the emergency service can be early informed about the collision situation, and corresponding measures can be taken. Together with the image, at least one of the following information can also be transmitted to the host server of the emergency service: an information on an actual global or geographic position of the motor vehicle and/or a registration number of the motor vehicle and/or information on the identity of an owner and/or the driver of the motor vehicle. Thus, the emergency service obtains all of the most important information on the collision, namely in particular on the actual geographic position of the motor vehicle together with the actual image of the environment and/or of the interior space of the motor vehicle. Thus, all of the most important information is present, which is required for an emergency operation.

A motor vehicle according to the invention includes a camera system including at least one camera for capturing an image as well as a communication unit. The communication unit is formed for transmitting image data representing the captured image via a wireless communication network to a computing device separate from the motor vehicle. The camera system can receive a result of processing of the image data performed by the computing device and provide at least one functionality in the motor vehicle depending on this result, Namely, the camera system is adapted to receive a result of an algorithm for a calibration of the camera performed by the computing device on the basis of the image data and to correct images captured by the camera depending on this result.

A system according to the invention includes a motor vehicle with a camera system as well as a computing device separate from the motor vehicle. The camera system includes at least one camera for capturing an image as well as a communication unit formed for transmitting image data to the computing device via a wireless communication network. The computing device can process the image data and transmit a result of this processing to the camera system. The computing device is adapted to perform an algorithm for a calibration of the camera on the basis of the image data and to transmit a result of this algorithm to the camera system.

The preferred embodiments presented with respect to the method according to the invention and the advantages thereof correspondingly apply to the motor vehicle according to the invention as well as to the system according to the invention.

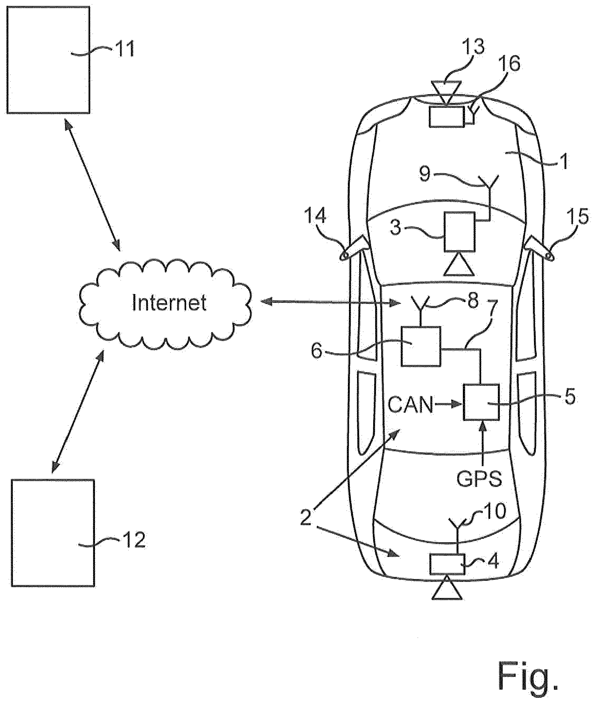

Further features of the invention are apparent from the claims, the figure and the description of figure. All of the features and feature combinations mentioned above in the description as well as the features and feature combinations mentioned below in the description of figure and/or shown in the figure alone are usable not only in the respectively specified combination, but also in other combinations or else alone.

Now, the invention is explained in more detail by way of a preferred embodiment as well as with reference to the attached drawing. Therein, the sole figure exemplifies in schematic representation a system according to an embodiment of the invention, wherein a method according to an embodiment of the invention is explained in more detail.

A motor vehicle 1 as it is shown in the sole figure is for example a passenger car. The motor vehicle 1 includes a camera system 2, which generally includes at least one camera, in particular a plurality of cameras. In the embodiment, a first camera 3 is mounted in the interior space of the motor vehicle 1 and captures the interior space of the motor vehicle 1. A second camera 4 is disposed in the rear region of the motor vehicle 1, for instance on the rear bumper or the tailgate or else on the rear window of the motor vehicle 1. The camera 4 captures an environmental region behind the motor vehicle 1. The invention is not restricted to the number and the arrangement of the cameras 3, 4 according to the sole figure; rather, an arbitrary number of cameras can be provided, and the cameras can be arbitrarily disposed on the motor vehicle 1. The number and arrangement of the cameras 3, 4 illustrated in the figure are only exemplary. For example, further cameras 13, 14, 15 can be provided, namely a camera 13 on the front bumper, a camera 14 on the left exterior mirror as well as a camera 15 on the right exterior mirror.

A controller 5 also belongs to the camera system 2, which for example can include a digital signal processor, a microcontroller as well as a memory. The controller 5 is electrically coupled to a GPS receiver and receives GPS data. It is also connected to a communication bus of the motor vehicle 1, for instance the CAN bus. The controller 5 thus receives vehicle data (and possibly also GPS data) transmitted via the communication bus (CAN bus). These includes in particular the current acceleration of the vehicle 1, the current pitch angle, the current rolling angle as well as the current yawing angle.

A router 6 is connected to the controller 5, namely via an Ethernet line 7. Thus, the controller 5 communicates with the router 6 according to the Ethernet protocol. The router 6 represents a communication unit of the camera system 2. Therein, the router 6 has an antenna 8 serving for receiving and transmitting electromagnetic waves.

The cameras 3, 4 and 13, 14, 15 too, can be equipped with respective transmitters with each one antenna 9, 10, 16 (for the sake of overview, the antennas of the cameras 14, 15 are not shown). The cameras 3, 4, 13, 14, 15 can capture images and transmit image data or video data representing the captured images to the controller 5, namely via the router 6.

The communication between the cameras 3, 4, 13, 14, 15 on the one hand and the router 6 on the other hand is for example effected via a WLAN (wireless local area network) connection and/or according to the Bluetooth standard.

Alternatively, the cameras 3, 4, 13, 14, 15 are connected to the controller 5 and/or router 6 via wired connection like Low-Voltage Differential Signaling (LVDS), analog or Ethernet connection.

In addition, the router 6 is formed for communication via the Internet. This communication can be effected according to the WiMax standard, thus according to a standard of the IEEE 802.16 family. Via the router 6, the captured image data can be transmitted to an external computing device 11 or one separate from the motor vehicle via the Internet. The computing device 11 has a considerably greater computational power than the internal controller 5. The computing device 11 can for example be a PC or a server and/or a portable communication apparatus such as for example a mobile phone and/or a notebook and the like. The computing device 11 is also connected to the Internet and thus can receive the image data of the cameras 3, 4, 13, 14, 15. The computing device 11 processes the received image data or video data and transmits the result of this processing back to the camera system 2, and more precisely to the controller 5 via the router 8. The result of the image processing now presents a basis for the provision of very different functionalities in the motor vehicle 1.

Additionally, the image data can also be transmitted to a host server 12 of an emergency service or an emergency call center together with other vehicle-specific information. Namely, based on the information picked up on the CAN bus, the controller 5 can determine that a collision of the motor vehicle 1 is imminent or occurs. If this is determined, thus, the controller 5 communicates the currently captured image data of the cameras 3, 4, 13, 14, 15 as well as further vehicle-specific information, such as for example the actual global position of the motor vehicle 1, a registration number of the motor vehicle 1, information on the identity of the driver or of the owner of the motor vehicle 1 and the like, to the host server 12 via the Internet.

Thus, the captured image data is transmitted to the computationally powerful computing device 11 and processed there. The result of this processing is then transmitted to the controller 5 via the Internet. Based on the result, then, a functionality in the motor vehicle 1 is provided. The following functionalities are provided:
- a calibration of the cameras 3, 4, 13, 14, 15 can be performed - the computing device 11 can perform an algorithm for the calibration of the cameras 3, 4 based on the image data and transmit the result of this algorithm to the controller 5;
- the controller 5 can activate an intrusion sensor of the motor vehicle 1 and/or an alarm system and/or a vehicle lock if the computing device 11 classifies an object depicted in the images as an intruder;
- if an intruder is identified, thus, the controller 5 can also transmit the video data of the cameras 3, 4, 13, 14, 15 to a mobile phone of the driver, namely via the Internet, such that the actual video can be displayed on the mobile phone;
- the computing device 11 can determine the identity of the driver of the motor vehicle 1 based on the image data, and the controller 5 can control at least one component of the motor vehicle 1 depending on the determined identity of the driver - for example, the position of a vehicle seat and/or the position of a steering wheel and/or a parameter of a suspension of the motor vehicle 1 and/or the position of a mirror and/or a parameter of a driving engine of the motor vehicle 1 can be adjusted here.

The interest now focuses on the calibration of the cameras 3, 4, 13, 14, 15, i.e. the performing of the algorithm for the calibration of the cameras 3, 4, 13, 14, 15 by the computing device 11. Together with the image data the controller 5 can also transmit the following data to the computing device 11: the GPS data which indicate the geographical position of the vehicle 1 at the time of image recording, as well as an information about the rolling angle and/or the pitch angle and/or the yawning angle at the time of image recording. Besides the image data the computing device 11 thus also receives the information about the acceleration, about the global position, and about at least one of the named angles. Moreover, the controller 5 can also transmit to the computing device 11 some characteristics of the used cameras 3, 4, 13, 14, 15 and parameters of the taken images like temperature, imager register values at time of image capture, lens type used. All those data may help in decision making on the computing device 11.

The computing device 11 can perform the algorithm for calibration only on the condition that the vehicle 1 at the time of image recording was on a straight and horizontal road. In this very case the image data represent a reliable basis for the performing of the algorithm. Optionally, it may be provided that the computing device 11 performs the algorithm only on the condition that the rolling angle and/or the pitch angle and/or the yawning angle at the time of image recording was/were smaller than the predetermined limit value.

The cameras 4, 13, 14, 15 capture the entire surroundings of the vehicle 1. The controller 5 can process the image data of the cameras 4, 13, 14, 15 to provide an overall image, which shows the surroundings of the vehicle 1 as well as the vehicle 1 itself from a bird view. This means that this overall image provides a plan view of the vehicle 1, on the one hand, and of its surroundings, on the other hand. This overall image then is represented on a display device in the vehicle 1. For a correct representation of the surroundings relative to the vehicle image and for a correct composition of the images of various cameras 4, 13, 14, 15 the calibration of the cameras 4, 13, 14, 15 is required. The actual position and adjustment of the cameras 4, 13, 14, 15 is namely not known, this due to the mounting tolerances, the aging, the deformation of vehicle components, as well as due to different and irregular load distribution within the vehicle 1 and alike. It thus is an objective to achieve a true-to-reality and jump-free transition between images of various cameras 4, 13, 14, 15 and a true-to-reality position of the images of the surroundings relative to the vehicle image. For this purpose, within the scope of the performance of the algorithm a correction factor is computed by the computing device 11, by which then the assumed actual position of the cameras on the vehicle 1 or the position of the depicted surroundings with regard to the vehicle 1 are corrected. For the computing of the correction factor the computing device 11 can expose the received images to a pattern identification and search for pre-determined features in the images. For instance road markings are detected. The positioning of the road markings within the image - for instance over a plurality of timewise subsequently captured images - can be compared with the orientation of the vehicle 1. If a deviation is detected, the correction factor is determined.

The computing device 11 subsequently transmits the correction factor via the internet to the camera system 2 of the vehicle 1. The controller 5 receives the correction factor and uses it for the correction of the overall image, which is generated from images of different cameras 4, 13, 14, 15. Thus an overall image with correct and true-to-reality transitions between the images of different cameras 4, 13, 14, 15 and with a correct position of the represented surroundings relative to the vehicle image can be generated. This overall image then can be displayed on the display device in the vehicle 1.

When performing the algorithm - i.e. when calculating the correction factor - the computing device 11 can also consider data of other vehicles. For instance data relating to a plurality of vehicles are collected in the computing device 11 and exposed to a statistical analysis. These data can be analysed by means of a data-mining method, and certain patterns in the data of various vehicles and/or outliers can be detected. Thus it can also be detected, that the result of the algorithm for the vehicle 1 deviates from the data of other vehicles, which for instance indicates an incorrect operation of the camera system 2. In such an error case the computing device 11 can transmit information to the controller 5 to the effect that for instance the software must be updated and/or the vehicle 1 be taken to a garage. This information can then be displayed to the driver.

If data relating to a plurality of vehicles are present in the computing device 11, the computing device 11 can also identify which road sections or which global positions are statistically most suitable for the recording of the images for the calibration of the cameras 3, 4, 13, 14, 15. As a rule these are straight and horizontal road sections. The computing device 11 can also transmit information to the controller 5 which suggests such preferred road section for the recording of image data with regard to the calibration of the cameras 3, 4, 13, 14, 15. This information can then be displayed to the driver, and the vehicle 1 can be taken to the preferred road section.

## Claims

1. Method for operating a camera system (2) of a motor vehicle (1) by
- capturing at least one image by a camera (3, 4, 13, 14, 15) of the camera system (2),
- transmitting image data representing the at least one image via a wireless communication network to a computing device (11) separate from the motor vehicle (1), and
- processing the image data by the computing device (11),
**characterized in that**
within the scope of the processing of the image data, an algorithm for a calibration of the camera (3, 4, 13, 14, 15) is performed by the computing device (11) and the result of the algorithm is transmitted to the camera system (2) via the wireless communication network wherein
by each of at least two cameras (3, 4, 13, 14, 15) of the camera system (2) an image of a surroundings of the vehicle (1) is recorded and the images of the at least two cameras (3, 4, 13, 14, 15) are processed to an overall image showing a plan view of the surroundings of the vehicle (1), wherein as a result of the algorithm a correction factor for the deviation of the actual position of the cameras is calculated, which is considered when composing the images of the at least two cameras (3, 4, 13, 14, 15).

2. Method according to claim 1,
**characterized in that**
by the camera (3, 4, 13, 14, 15) an environmental region of the vehicle (1) is captured and images recorded by the camera (3, 4, 13, 14, 15) are displayed together with a vehicle image on a display device in the vehicle (1), wherein a correction factor for the correction of a position of the recorded images of the environmental region relative to the vehicle image is computed as a result of the algorithm and transmitted to the camera system (2).

3. Method according to anyone of the preceding claims,
**characterized in that**
together with the image data also position data, which contain information about the global position of the vehicle (1) at the time of recording the image, are transmitted by the camera system (2) to the computing device (11) and are considered by the computing device (11) with regard to the algorithm.

4. Method according to claim 3,
**characterized in that**
the position data are considered by the computing device (11) to the effect that in dependence on the global position of the vehicle (1):
- the result of the algorithm is either accepted as plausible or dismissed as implausible or
- it is decided whether the algorithm is performed on the basis of the image data or not.

5. Method according to anyone of the preceding claims,
**characterized in that**
data are transmitted from the computing device (11) to the camera system (2), by which at least one preferred road section is suggested for recording the image data for performing the algorithm.

6. Method according to anyone of the preceding claims,
**characterized in that**
together with the image data also vehicle data which contain an information about an acceleration of the vehicle (1) at the time of image recording and/or an information about an inclination angle of the vehicle (1) at the time of image recording, in particular a rolling angle and/or a yawning angle and/or a pitch angle, are transmitted by the camera system (2) to the computing device (11) and are considered by the computing device (11) with regard to the algorithm.

7. Method according to claim 6,
**characterized in that**
the information about the inclination angle and/or about the acceleration is considered by the computing device (11) to the effect that:
- in dependence of this information the result of the algorithm is either accepted as plausible or dismissed as implausible or
- the inclination angle and/or the acceleration is considered when performing the algorithm.

8. Method according to anyone of the preceding claims,
**characterized in that**
for a plurality of vehicles the algorithm for the calibration is performed by means of the computing device (11) and the plurality of results is exposed to a data-mining method and
- on the basis of a comparison between the result of the algorithm for the calibration of the camera (3, 4, 13, 14, 15) and the result of the data-mining method an incorrect operation of the camera system (2) is detected and/or
- a result of the data-mining method is considered when performing the algorithm for the calibration of the camera (3, 4, 13, 14, 15).

9. Method according to anyone of the preceding claims,
**characterized in that**
- the image data is transmitted to a host server as the computing device (11) and processed by the host server and/or
- the image data is transmitted to a portable communication apparatus as the computing device (11) and processed by the portable communication apparatus.

10. Method according to anyone of the preceding claims,
**characterized in that**
the processing of the image data by the computing device (11) includes that the at least one image is subjected to pattern identification and an object identified in the image is classified, wherein the result of this classification is transmitted to the camera system (2) via the wireless communication network.

11. Method according to claim 10,
**characterized in that**
depending on the result of the classification, at least one of the following functionalities is provided by the camera system (2):
- activating an intrusion sensor of the motor vehicle (1), and/or
- capturing a time sequence of images by the camera (3, 4, 13, 14, 15) and transmitting video data representing the sequence of images to a portable communication apparatus of a driver of the motor vehicle (1) via the wireless communication network.

12. Method according to anyone of the preceding claims,
**characterized in that**
the processing of the image data includes that the identity of a driver of the motor vehicle (1) is determined by the computing device (11) based on the at least one image, and data with information on the identity of the driver is transmitted to the camera system (2).

13. Method according to claim 12,
**characterized in that**
at least one component of the motor vehicle (1) is controlled depending on the identity of the driver.

14. Method according to claim 13,
**characterized in that**
depending on the identity of the driver, at least one of the following functionalities is provided in the motor vehicle (1):
- activating an alarm system and/or a vehicle lock, and/or
- adjusting a position of a vehicle seat, and/or
- adjusting a position of a steering wheel, and/or
- adjusting a parameter of a suspension of the motor vehicle (1), and/or
- adjusting a parameter of a driving engine of the motor vehicle (1), and/or
- adjusting an orientation of a mirror of the motor vehicle (1).

15. Method according to anyone of the preceding claims,
**characterized in that**
it is identified by the camera system (2) that a collision of the motor vehicle (1) is imminent or occurs, and after identifying such a collision situation, an image is captured by the camera (3, 4, 13, 14, 15) and transmitted to a host server (12) of an emergency service via the wireless communication network.

16. Method according to claim 15,
**characterized in that**
at least one of the following information is also transmitted to the host server (12) of the emergency service together with the image:
- information on an actual global position of the motor vehicle (1), and/or
- a registration number of the motor vehicle (1), and/or
- information on the identity of an owner of the motor vehicle (1).

17. Motor vehicle (1) including a camera system (2), wherein the camera system (2) comprises:
- at least one camera (3, 4, 13, 14, 15) for capturing an image, and
- a communication unit (6) for transmitting image data representing the captured image to a computing device (11) separate from the motor vehicle (1) via a wireless communication network,
**characterized in that**
the camera system (2) is adapted to receive a result of an algorithm for a calibration of the camera (3, 4, 13, 14, 15) performed by the computing device (11) on the basis of the image data and to correct images captured by the camera (3, 4, 13, 14, 15) depending on this result wherein
by each of at least two cameras (3, 4, 13, 14, 15) of the camera system (2) an image of a surroundings of the vehicle (1) is recorded and the images of the at least two cameras (3, 4, 13, 14, 15) are processed to an overall image showing a plan view of the surroundings of the vehicle (1), wherein as a result of the algorithm a correction factor for the deviation of the actual positions of the cameras is calculated, which is considered when composing the images of the at least two cameras (3, 4, 13, 14, 15).

18. System including:
- a motor vehicle (1) with a camera system (2), and
- a computing device (11) separate from the motor vehicle (1),
- wherein the camera system (2) has at least one camera (3, 4, 13, 14, 15) for capturing an image as well as a communication unit (6), which is formed for transmitting image data representing the captured image to the computing device (11) via a wireless communication network,
**characterized in that**
the computing device (11) is adapted to perform an algorithm for a calibration of the camera (3, 4, 13, 14, 15) on the basis of the image data and to transmit a result of this algorithm to the camera system (2) wherein
by each of at least two cameras (3, 4, 13, 14, 15) of the camera system (2) an image of a surroundings of the vehicle (1) is recorded and the images of the at least two cameras (3, 4, 13, 14, 15) are processed to an overall image showing a plan view of the surroundings of the vehicle (1), wherein as a result of the algorithm a correction factor for the deviation of the actual positions of the cameras is calculated, which is considered when composing the images of the at least two cameras (3, 4, 13, 14, 15).

## Patentansprüche

1. Verfahren zum Betreiben eines Kamerasystems (2) eines Kraftfahrzeugs (1), umfassend:
- Erfassen von mindestens einem Bild mithilfe einer Kamera (3, 4, 13, 14, 15) des Kamerasystems (2),
- Übertragen von Bilddaten, die das mindestens eine Bild darstellen, über ein drahtloses Kommunikationsnetzwerk an eine Computervorrichtung (11), die getrennt von dem Kraftfahrzeug (1) ist, und
- Verarbeiten der Bilddaten durch die Computervorrichtung (11),
**dadurch gekennzeichnet, dass**
in dem Umfang der Verarbeitung der Bilddaten ein Algorithmus zum Kalibrieren der Kamera (3, 4, 13, 14, 15) durch die Computervorrichtung (11) ausgeführt wird und dass das Ergebnis des Algorithmus über das drahtlose Kommunikationsnetzwerk an das Kamerasystem (2) übertragen wird, wobei
mithilfe von jeder der mindestens zwei Kameras (3, 4, 13, 14, 15) des Kamerasystems (2) ein Bild von einer Umgebung des Fahrzeugs (1) aufgezeichnet wird, und die Bilder der mindestens zwei Kameras (3, 4, 13, 14, 15) zu einem Gesamtbild verarbeitet werden, das eine Draufsicht der Umgebung des Fahrzeugs (1) zeigt, wobei als ein Ergebnis des Algorithmus ein Korrekturfaktor für die Abweichung der aktuellen Position der Kameras berechnet wird, der berücksichtigt wird, wenn die Bilder der mindestens zwei Kameras (3, 4, 13, 14, 15) zusammengesetzt werden.

2. Verfahren nach Anspruch 1, **dadurch gekennzeichnet, dass**
durch die Kamera (3, 4, 13, 14, 15) ein Umgebungsbereich des Fahrzeugs (1) erfasst wird und dass Bilder, die durch die Kamera (3, 4, 13, 14, 15) aufgezeichnet werden, zusammen mit einem Fahrzeugbild auf einer Anzeigevorrichtung in dem Fahrzeug (1) angezeigt werden, wobei ein Korrekturfaktor für die Korrektur einer Position der aufgezeichneten Bilder des Umgebungsbereichs in Bezug auf das Fahrzeugbild als ein Ergebnis des Algorithmus berechnet wird und an das Kamerasystem (2) übertragen wird.

3. Verfahren nach einem der vorhergehenden Ansprüche, **dadurch gekennzeichnet, dass**
zusammen mit den Bilddaten auch Positionsdaten, die Informationen über die globale Position des Fahrzeugs (1) zum Zeitpunkt des Aufzeichnens des Bildes enthalten, von dem Kamerasystem (2) an die Computervorrichtung (11) übertragen werden und von der Computervorrichtung (11) in Bezug auf den Algorithmus berücksichtigt werden.

4. Verfahren nach Anspruch 3, **dadurch gekennzeichnet, dass**
die Positionsdaten von der Computervorrichtung (11) berücksichtigt werden, mit der Folge, dass in Abhängigkeit von der globalen Position des Fahrzeugs (1) :
- das Ergebnis des Algorithmus entweder als plausibel akzeptiert wird oder als nicht plausibel verworfen wird, oder
- entschieden wird, ob der Algorithmus auf der Grundlage der Bilddaten gegebenenfalls ausgeführt wird.

5. Verfahren nach einem der vorhergehenden Ansprüche, **dadurch gekennzeichnet, dass**
Daten von der Computervorrichtung (11) an das Kamerasystem (2) übertragen werden, wodurch mindestens ein bevorzugter Straßenabschnitt zum Aufzeichnen der Bilddaten für das Ausführen des Algorithmus vorgeschlagen wird.

6. Verfahren nach einem der vorhergehenden Ansprüche, **dadurch gekennzeichnet, dass**
zusammen mit den Bilddaten auch Fahrzeugdaten, die Informationen über eine Beschleunigung des Fahrzeugs (1) zum Zeitpunkt der Bildaufzeichnung und/oder Informationen über einen Neigungswinkel des Fahrzeugs (1) zum Zeitpunkt der Bildaufzeichnung insbesondere einen Rollwinkel und/oder einen Gierwinkel und/oder einen Nickwinkel enthalten, von dem Kamerasystem (2) an die Computervorrichtung (11) übertragen werden und von der Computervorrichtung (11) in Bezug auf den Algorithmus berücksichtigt werden.

7. Verfahren nach Anspruch 6, **dadurch gekennzeichnet, dass**
die Informationen über den Neigungswinkel und/oder über die Beschleunigung von der Computervorrichtung (11) mit der Folge berücksichtigt werden, dass:
- das Ergebnis des Algorithmus in Abhängigkeit von diesen Informationen entweder als plausibel akzeptiert wird oder als nicht plausibel verworfen wird, oder
- der Neigungswinkel und/oder die Beschleunigung berücksichtigt werden, wenn der Algorithmus ausgeführt wird.

8. Verfahren nach einem der vorhergehenden Ansprüche, **dadurch gekennzeichnet, dass**
der Algorithmus zum Kalibrieren für eine Vielzahl von Fahrzeugen mithilfe der Computervorrichtung (11) ausgeführt wird und die Vielzahl von Ergebnissen wird in einem Data-Mining-Verfahren offengelegt und
- auf der Grundlage eines Vergleichs zwischen dem Ergebnis des Algorithmus zum Kalibrieren der Kamera (3, 4, 13, 14, 15) und das Ergebnis des Data-Mining-Verfahrens ein fehlerhafter Betrieb des Kamerasystems (2) erkannt wird und/oder
- ein Ergebnis des Data-Mining-Verfahrens berücksichtigt wird, wenn der Algorithmus zum Kalibrieren der Kamera (3, 4, 13, 14, 15) ausgeführt wird.

9. Verfahren nach einem der vorhergehenden Ansprüche, **dadurch gekennzeichnet, dass**
- die Bilddaten an einen Host-Server, der als die Computervorrichtung (11) dient, übertragen werden und von dem Host-Server verarbeitet werden und/oder
- die Bilddaten an eine tragbare Kommunikationsvorrichtung, die als die Computervorrichtung (11) dient, übertragen werden und von der tragbaren Kommunikationsvorrichtung verarbeitet werden.

10. Verfahren nach einem der vorhergehenden Ansprüche, **dadurch gekennzeichnet, dass**
das Verarbeiten der Bilddaten durch die Computervorrichtung (11) umfasst, dass das mindestens eine Bild einer Mustererkennung unterzogen wird und ein identifizierter Gegenstand in dem Bild klassifiziert wird, wobei das Ergebnis dieser Klassifizierung über das drahtlose Kommunikationsnetzwerk an das Kamerasystem (2) übertragen wird.

11. Verfahren nach Anspruch 10, **dadurch gekennzeichnet, dass**
abhängig von dem Ergebnis der Klassifizierung mindestens eine der folgenden Funktionalitäten von dem Kamerasystem (2) bereitgestellt wird:
- Aktivieren eines Einbruchssensors des Kraftfahrzeugs (1), und/oder
- Erfassen einer Zeitabfolge von Bildern durch die Kamera (3, 4, 13, 14, 15), und - Übertragen von Videodaten, welche die Abfolge von Bildern darstellen, über das drahtlose Kommunikationsnetzwerk an eine tragbare Kommunikationsvorrichtung eines Fahrers des Kraftfahrzeugs (1).

12. Verfahren nach einem der vorhergehenden Ansprüche, **dadurch gekennzeichnet, dass**
das Verarbeiten der Bilddaten umfasst, dass die Identität des Fahrers des Kraftfahrzeugs (1) durch die Computervorrichtung (11) aufgrund des mindestens einen Bildes ermittelt wird, und dass Daten mit Informationen zur Identität des Fahrers an das Kamerasystem (2) übertragen werden.

13. Verfahren nach Anspruch 12, **dadurch gekennzeichnet, dass**
mindestens eine Komponente des Kraftfahrzeugs (1) in Abhängigkeit von der Identität des Fahrers gesteuert wird.

14. Verfahren nach Anspruch 13, **dadurch gekennzeichnet, dass**
abhängig von der Identität des Fahrers mindestens eine der folgenden Funktionalitäten in dem Kraftfahrzeug (1) bereitgestellt wird:
- Aktivieren eines Alarmsystems und/oder einer Fahrzeugverriegelung, und/oder
- Einstellen einer Position eines Fahrzeugsitzes, und/oder
- Einstellen einer Position eines Lenkrads, und/oder
- Einstellen eines Parameters einer Aufhängung des Kraftfahrzeugs (1), und/oder
- Einstellen eines Parameters eines Antriebsmotors des Kraftfahrzeugs (1), und/oder
- Einstellen einer Ausrichtung eines Spiegels des Kraftfahrzeugs (1) .

15. Verfahren nach einem der vorhergehenden Ansprüche, **dadurch gekennzeichnet, dass**
von dem Kamerasystem (2) identifiziert wird, dass eine Kollision des Kraftfahrzeugs (1) unmittelbar bevorsteht oder aufgetreten ist, und nach dem Identifizieren dieser Kollisionssituation, ein Bild von der Kamera (3, 4, 13, 14, 15) erfasst und über das drahtlose Kommunikationsnetzwerk an einen Host-Server (12) eines Notfalldienstes übertragen wird.

16. Verfahren nach Anspruch 15, **dadurch gekennzeichnet, dass**
mindestens eine der folgenden Informationen zusammen mit dem Bild auch an den Host-Server (12) des Notfalldienstes übertragen wird:
- Informationen über eine aktuelle globale Position des Kraftfahrzeugs (1), und/oder
- eine Zulassungsnummer des Kraftfahrzeugs (1), und/oder
- Informationen über die Identität des Besitzers des Kraftfahrzeugs (1).

17. Kraftfahrzeug (1), das ein Kamerasystem (2) umfasst, wobei das Kamerasystem (2) umfasst:
- mindestens eine Kamera (3, 4, 13, 14, 15) zum Erfassen eines Bildes, und
- eine Kommunikationseinheit (6) zum Übertragen von Bilddaten, die das erfasste Bild darstellen, über ein drahtloses Kommunikationsnetzwerk an eine Computervorrichtung (11), die getrennt von dem Fahrzeug (1) ist,
**dadurch gekennzeichnet, dass** das Kamerasystem (2) geeignet ist zum Empfangen eines Ergebnisses eines Algorithmus zum Kalibrieren der Kamera (3, 4, 13, 14, 15), das von der Computervorrichtung (11) auf der Grundlage der Bilddaten ausgeführt wird, und zum Korrigieren in Abhängigkeit von diesem Ergebnis von Bildern, die von der Kamera (3, 4, 13, 14, 15) erfasst wurden, wobei
mithilfe von jeder der mindestens zwei Kameras (3, 4, 13, 14, 15) des Kamerasystems (2) ein Bild einer Umgebung des Fahrzeugs (1) aufgezeichnet wird, und die Bilder der mindestens zwei Kameras (3, 4, 13, 14, 15) zu einem Gesamtbild verarbeitet werden, das eine Draufsicht der Umgebung des Fahrzeugs (1) zeigt, wobei als Ergebnis des Algorithmus ein Korrekturfaktor für die Abweichung der aktuellen Positionen der Kameras berechnet wird, der berücksichtigt wird, wenn die Bilder der mindestens zwei Kameras (3, 4, 13, 14, 15) zusammengesetzt werden.

18. System, umfassend:
- ein Kraftfahrzeug (1) mit einem Kamerasystem (2), und
- eine Computervorrichtung (11), die getrennt von dem Kraftfahrzeug (1) ist,
- wobei das Kamerasystem (2) mindestens eine Kamera (3, 4, 13, 14, 15) zum Erfassen eines Bildes sowie eine Kommunikationseinheit (6) aufweist, die gestaltet ist, um Bilddaten, die das erfasste Bild darstellen, über ein drahtloses Kommunikationsnetzwerk an die Computervorrichtung (11) zu übertragen,
**dadurch gekennzeichnet, dass** die Computervorrichtung (11) geeignet ist zum Ausführen eines Algorithmus zum Kalibrieren der Kamera (3, 4, 13, 14, 15) auf der Grundlage der Bilddaten und zum Übertragen eines Ergebnisses dieses Algorithmus an das Kamerasystem (2), wobei mithilfe von jeder der mindestens zwei Kameras (3, 4, 13, 14, 15) des Kamerasystems (2) ein Bild von einer Umgebung des Fahrzeugs (1) aufgezeichnet wird, und die Bilder der mindestens zwei Kameras (3, 4, 13, 14, 15) zu einem Gesamtbild verarbeitet werden, das eine Draufsicht der Umgebung des Fahrzeugs (1) zeigt, wobei als Ergebnis des Algorithmus ein Korrekturfaktor für die Abweichung der aktuellen Positionen der Kameras berechnet wird, der berücksichtigt wird, wenn die Bilder der mindestens zwei Kameras (3, 4, 13, 14, 15) zusammengesetzt werden.

## Revendications

1. Procédé de fonctionnement d'un système de caméras (2) d'un véhicule à moteur (1) par
- capture d'au moins une image par une caméra (3, 4, 13, 14, 15) du système de caméras (2),
- transmission de données d'image représentant l'au moins une image par le biais d'un réseau de communication sans fil à un dispositif informatique (11) séparé du véhicule à moteur (1), et
- traitement des données d'image par le dispositif informatique (11),
**caractérisé en ce que**
dans le cadre du traitement des données d'image, un algorithme d'étalonnage de la caméra (3, 4, 13, 14, 15) est exécuté par le dispositif informatique (11) et le résultat de l'algorithme est transmis au système de caméras (2) par le biais du réseau de communication sans fil, dans lequel
par chacune d'au moins deux caméras (3, 4, 13, 14, 15) du système de caméras (2), une image des alentours du véhicule (1) est enregistrée et les images des au moins deux caméras (3, 4, 13, 14, 15) sont transformées en une image globale montrant une vue en plan des alentours du véhicule (1), dans lequel, comme résultat de l'algorithme, un facteur de correction pour l'écart de la position réelle des caméras est calculé, lequel est pris en compte lors de la composition des images des au moins deux caméras (3, 4, 13, 14, 15).

2. Procédé selon la revendication 1,
**caractérisé en ce que**
par la caméra (3, 4, 13, 14, 15), une région environnementale du véhicule (1) est capturée et des images enregistrées par la caméra (3, 4, 13, 14, 15) sont affichées avec une image du véhicule sur un dispositif d'affichage dans le véhicule (1), dans lequel un facteur de correction pour la correction d'une position des images enregistrées de la région environnementale par rapport à l'image du véhicule est calculé comme résultat de l'algorithme et transmis au système de caméras (2).

3. Procédé selon l'une quelconque des revendications précédentes,
**caractérisé en ce que**
avec les données d'image, des données de position, qui contiennent des informations sur la position globale du véhicule (1) au moment de l'enregistrement de l'image, sont également transmises par le système de caméras (2) au dispositif informatique (11) et sont prises en compte par le dispositif informatique (11) relativement à l'algorithme.

4. Procédé selon la revendication 3,
**caractérisé en ce que**
les données de position sont prises en compte par le dispositif informatique (11) avec pour effet que, en fonction de la position globale du véhicule (1) :
- le résultat de l'algorithme est accepté comme plausible ou écarté comme peu plausible ou
- il est décidé que l'algorithme est effectué ou non sur la base des données d'image.

5. Procédé selon l'une quelconque des revendications précédentes,
**caractérisé en ce que**
des données sont transmises depuis le dispositif informatique (11) au système de caméras (2), données par lesquelles au moins une section de route préférée est suggérée pour enregistrer les données d'image pour effectuer l'algorithme.

6. Procédé selon l'une quelconque des revendications précédentes,
**caractérisé en ce que**
avec les données d'image, des données de véhicule qui contiennent une information sur une accélération du véhicule (1) au moment de l'enregistrement d'images et/ou une information sur un angle d'inclinaison du véhicule (1) au moment de l'enregistrement d'images, en particulier un ange de roulis et/ou un angle de lacet et/ou un angle de tangage, sont également transmises par le système de caméras (2) au dispositif informatique (11) et sont prises en compte par le dispositif informatique (11) relativement à l'algorithme.

7. Procédé selon la revendication 6,
**caractérisé en ce que**
les informations sur l'angle d'inclinaison et/ou sur l'accélération sont prises en compte par le dispositif informatique (11) avec pour effet que :
- en fonction de ces informations, le résultat de l'algorithme est accepté comme plausible ou écarté comme peu plausible ou
- l'angle d'inclinaison et/ou l'accélération sont pris en compte lors de l'exécution de l'algorithme.

8. Procédé selon l'une quelconque des revendications précédentes,
**caractérisé en ce que**
pour une pluralité de véhicules, l'algorithme d'étalonnage est exécuté au moyen du dispositif informatique (11) et la pluralité de résultats est exposée à un procédé d'exploration de données et
- sur la base d'une comparaison entre le résultat de l'algorithme d'étalonnage de la caméra (3, 4, 13, 14, 15) et le résultat du procédé d'exploration de données, un fonctionnement incorrect du système de caméras (2) est détecté et/ou
- un résultat du procédé d'exploration de données est pris en compte lors de l'exécution de l'algorithme d'étalonnage de la caméra (3, 4, 13, 14, 15).

9. Procédé selon l'une quelconque des revendications précédentes,
**caractérisé en ce que**
- les données d'image sont transmises à un serveur hôte servant de dispositif informatique (11) et traitées par le serveur hôte et/ou
- les données d'image sont transmises à un appareil de communication portable servant de dispositif informatique (11) et traitées par l'appareil de communication portable.

10. Procédé selon l'une quelconque des revendications précédentes,
**caractérisé en ce que**
le traitement des données d'image par le dispositif informatique (11) comporte le fait que l'au moins une image est soumise à une identification de motifs et un objet identifié dans l'image est classé, le résultat de cette classification étant transmis au système de caméras (2) par le biais du réseau de communication sans fil.

11. Procédé selon la revendication 10,
**caractérisé en ce que**
en fonction du résultat de la classification, au moins une des fonctionnalités suivantes est proposée par le système de caméras (2) :
- activer un capteur d'intrusion du véhicule à moteur (1), et/ou
- capturer une séquence temporelle d'images par la caméra (3, 4, 13, 14, 15) et transmettre des données vidéo représentant la séquence d'images à un appareil de communication portable d'un conducteur du véhicule à moteur (1) par le biais du réseau de communication sans fil.

12. Procédé selon l'une quelconque des revendications précédentes,
**caractérisé en ce que**
le traitement des données d'image comporte le fait que l'identité d'un conducteur du véhicule à moteur (1) est déterminée par le dispositif informatique (11) sur la base de l'au moins une image, et des données avec des informations sur l'identité du conducteur sont transmises au système de caméras (2).

13. Procédé selon la revendication 12,
**caractérisé en ce que**
au moins un composant du véhicule à moteur (1) est contrôlé en fonction de l'identité du conducteur.

14. Procédé selon la revendication 13,
**caractérisé en ce que**
en fonction de l'identité du conducteur, au moins une des fonctionnalités suivantes est proposée dans le véhicule à moteur (1) :
- activer un système d'alarme et/ou un verrouillage du véhicule, et/ou
- régler une position d'un siège du véhicule, et/ou
- régler une position d'un volant, et/ou
- régler un paramètre d'une suspension du véhicule à moteur (1), et/ou
- régler un paramètre d'un moteur d'entraînement du véhicule à moteur (1), et/ou
- régler une orientation d'un miroir du véhicule à moteur (1).

15. Procédé selon l'une quelconque des revendications précédentes,
**caractérisé en ce que**
il est identifié par le système de caméras (2) qu'une collision du véhicule à moteur (1) est imminente ou se produit, et après l'identification d'une telle situation de collision, une image est capturée par la caméra (3, 4, 13, 14, 15) et transmise à un serveur hôte (12) d'un service d'urgence par le biais du réseau de communication sans fil.

16. Procédé selon la revendication 15,
**caractérisé en ce que**
au moins une des informations suivantes est également transmise au serveur hôte (12) du service d'urgence avec l'image :
- des informations sur une position globale réelle du véhicule à moteur (1), et/ou
- un numéro d'immatriculation du véhicule à moteur (1), et/ou
- des informations sur l'identité d'un propriétaire du véhicule à moteur (1).

17. Véhicule à moteur (1) comportant un système de caméras (2), le système de caméras (2) comprenant :
- au moins une caméra (3, 4, 13, 14, 15) pour capturer une image, et
- une unité de communication (6) pour transmettre des données d'image représentant l'image capturée à un dispositif informatique (11) séparé du véhicule à moteur (1) par le biais d'un réseau de communication sans fil,
**caractérisé en ce que**
le système de caméras (2) est adapté pour recevoir un résultat d'un algorithme d'étalonnage de la caméra (3, 4, 13, 14, 15) exécuté par le dispositif informatique (11) sur la base des données d'image et pour corriger des images capturées par la caméra (3, 4, 13, 14, 15) en fonction de ce résultat, dans lequel par chacune d'au moins deux caméras (3, 4, 13, 14, 15) du système de caméras (2), une image des alentours du véhicule (1) est enregistrée et les images des au moins deux caméras (3, 4, 13, 14, 15) sont transformées en une image globale montrant une vue en plan des alentours du véhicule (1), dans lequel, comme résultat de l'algorithme, un facteur de correction pour l'écart des positions réelles des caméras est calculé, lequel est pris en compte lors de la composition des images des au moins deux caméras (3, 4, 13, 14, 15).

18. Système comportant :
- un véhicule à moteur (1) avec un système de caméras (2), et
- un dispositif informatique (11) séparé du véhicule à moteur (1),
- dans lequel le système de caméras (2) a au moins une caméra (3, 4, 13, 14, 15) pour capturer une image, ainsi qu'une unité de communication (6), qui est formée pour transmettre des données d'image représentant l'image capturée au dispositif informatique (11) par le biais d'un réseau de communication sans fil,
**caractérisé en ce que**
le dispositif informatique (11) est adapté pour exécuter un algorithme d'étalonnage de la caméra (3, 4, 13, 14, 15) sur la base des données d'image et pour transmettre un résultat de cet algorithme au système de caméras (2), dans lequel
par chacune d'au moins deux caméras (3, 4, 13, 14, 15) du système de caméras (2), une image des alentours du véhicule (1) est enregistrée et les images des au moins deux caméras (3, 4, 13, 14, 15) sont transformées en une image globale montrant une vue en plan des alentours du véhicule (1), dans lequel, comme résultat de l'algorithme, un facteur de correction pour l'écart des positions réelles des caméras est calculé, lequel est pris en compte lors de la composition des images des au moins deux caméras (3, 4, 13, 14, 15).
